# EUROPÄISCHE PATENTANMELDUNG

(11) **EP 2 402 225 A2**
(43) Veröffentlichungstag der Anmeldung: **04.01.2012**
(21) Anmeldenummer: 11005070.5
(22) Anmeldetag: 22.06.2011
(51) Int. Cl.: B60W 30/16, B60W 30/18, B60W 10/04, B60W 10/18, B60W 50/08

(54) **Verfahren zum Betreiben eines Kraftfahrzeugs und Kraftfahrzeug**

(30) Priorität: 02.07.2010 DE 102010025897
(71) Anmelder: Audi AG, 85045 Ingolstadt (DE)
(72) Erfinder: Staudte, Carmen, 85080 Gaimersheim (DE); Limbacher, Reimund, 85055 Ingolstadt (DE); Reichel, Michael, 85049 Ingolstadt (DE)
(74) Vertreter: Thielmann, Frank

(57) **Zusammenfassung**

Ein Fahrzeug soll im Straßenverkehr sicherer betrieben werden können. Dazu wird ein Verfahren zum Betreiben eines Kraftfahrzeugs (10), in dem sich ein Fahrer befindet, bereitgestellt, bei dem ein Verhalten eines vor dem Kraftfahrzeug (10) befindlichen Objekts beispielsweise durch eine Umfeldsensorik (1) erfasst wird. In Abhängigkeit von dem Verhalten des Objekts wird dann auf den Fahrer des Kraftfahrzeugs (10) ein Ruck ausgeübt, in dem das Fahrzeug eine Nickbewegung macht. Damit kann die Aufmerksamkeit eines Fahrers bei einem bevorstehenden Anfahrvorgang oder bei einem bereits erfolgten Anfahrvorgang erhöht werden.

## Beschreibung

Die vorliegende Erfindung betrifft ein Verfahren zum Betreiben eines Kraftfahrzeugs, in dem sich ein Fahrer befindet, durch Erfassen eines Verhaltens eines vor dem Kraftfahrzeug befindlichen Objekts. Darüber hinaus betrifft die vorliegende Erfindung ein entsprechendes Kraftfahrzeug mit einer Erfassungseinrichtung.

Ein ACC (Adaptive Cruise Control) System mit Stop & Go-Funktion erlaubt ein automatisches Anfahren. Kommt das ACC-Fahrzeug in Folgefahrt hinter einem vorausfahrenden Fahrzeug zum Stehen, so ist das ACC-Fahrzeug innerhalb einer definierten Zeit (üblicherweise ca. 3 Sekunden) anfahrbereit. Das heißt, fährt das direkt vorausfahrende Fahrzeug innerhalb dieser genannten "anfahrbereiten" Zeit an, so fährt das ACC-Fahrzeug ebenfalls wieder an. Steht das ACC-Fahrzeug jedoch länger im angehaltenen Zustand hinter einem Vorderfahrzeug, so ist eine ACC-Bedienhandlung (Ziehen des Hebels zur Wiederaufnahme/Resume) des Fahrers nötig, um das Fahrzeug erneut in einen anfahrbereiten Zustand zu versetzen (dies können wieder 3 Sekunden oder auch mehr sein).

Um die Aufmerksamkeit des Fahrers während dieser "anfahrbereiten" Zeit auf die Straße zu lenken, nutzen Fahrerassistenzsysteme heute verschiedene Kanäle. So werden beispielsweise optische und akustische Warnungen ausgegeben. In gefährlichen Situationen wird der Fahrer zudem über einen Längsruck zu erhöhter Aufmerksamkeit bewegt.

Nachteilig an den bekannten Systemen ist, dass immer eine Bedienhandlung nötig ist, um das ACC-Fahrzeug nach Ablauf der "anfahrbereiten" Zeit wieder in einen anfahrbereiten Zustand zu versetzen. Ferner kann der Fahrer heute vor dem Anfahren nicht auf die Situation aufmerksam gemacht werden. Würde man dies durch optische oder akustische Ausgaben tun, wäre dies nicht hinnehmbar (ständiges Piepsen oder Blinken). Darüber hinaus wird ein zusätzlicher Sicherheitsgewinn im Bereich der ersten 100 bis 200 ms nach einer Situationsänderung nicht ausgeschöpft. Gerade in diesem Zeitbereich wäre eine Steigerung der Aufmerksamkeit besonders gewinnbringend.

Aus der Druckschrift DE 10 2007 029 482 A1 ist ein Fahrerassistenzsystem mit Anfahrhinweisfunktion bekannt. Das Fahrerassistenzsystem ist mit einer Sensoreinrichtung zur Erkennung einer Situation, in der ein Anfahren des Fahrzeugs möglich ist, und mit einer Steuereinrichtung zur Ausgabe eines Anfahrhinweises an den Fahrer ausgestattet. Bei Erkennung einer Anfahrsituation wird ein haptischer Anfahrhinweis ausgegeben. Der Fahrer wird also über diverse Arten von Hinweise informiert, dass ein fahrerinitiiertes Anfahren zu einem bestimmten Zeitpunkt möglich ist. Der Anfahrhinweis fordert den Fahrer also auf, das Anfahren zu initiieren. Der Fahrer dient folglich als Zwischenglied.

Die Aufgabe der vorliegenden Erfindung besteht somit darin, nach einer Änderung einer Fahrsituation die Aufmerksamkeit des Fahrers besser auf die Straße lenken zu können.

Erfindungsgemäß wird diese Aufgabe gelöst durch ein Verfahren zum Betreiben eines Kraftfahrzeugs, in dem sich ein Fahrer befindet, durch Erfassen eines Verhaltens (mindestens) eines vor dem Kraftfahrzeug befindlichen Objekts, und Ausüben eines Rucks auf den Fahrer in Abhängigkeit von dem Verhalten des Objekts, indem das Fahrzeug eine Nickbewegung macht.

Darüber hinaus wird erfindungsgemäß bereitgestellt ein Kraftfahrzeug mit einer Einrichtung zum Ausüben eines Rucks auf einen Fahrer des Kraftfahrzeugs, einer Erfassungseinrichtung zum Erfassen eines Verhaltens eines vor dem Kraftfahrzeug befindlichen Objekts, und einer Einrichtung zum Ausüben eines Rucks auf einen Fahrer des Kraftfahrzeugs, wobei mit der Einrichtung auf den Fahrer des Kraftfahrzeugs in Abhängigkeit von dem erfassten Verhalten des Objekts ein Ruck ausübbar ist, indem das Fahrzeug eine Nickbewegung macht.

In vorteilhafter Weise wird also in Abhängigkeit von einem Verhalten eines Objekts vor dem Kraftfahrzeug eine Nickbewegung des Fahrzeugs und damit ein Ruck des Fahrers verursacht. Damit wird die Aufmerksamkeit des Fahrers in Abhängigkeit von dem Verhalten des Objekts erregt.

Vorzugsweise handelt es sich bei dem Objekt um ein vorausfahrendes Fahrzeug. Damit können Informationen von dem vorausfahrenden Fahrzeug direkt genutzt werden, um das eigene Fahrzeug automatisch zu steuern.

Darüber hinaus kann es sich bei dem Objekt auch um ein Fahrzeug handeln, das vor einem dem Kraftfahrzeug unmittelbar vorausfahrenden Fahrzeug fährt (vorvorausfahrendes Fahrzeug). Auf diese Weise kann der Fahrer noch schneller auf eine bevorstehende Situation aufmerksam gemacht werden.

Besonders bevorzugt ist, wenn es sich bei dem Verhalten des Objekts um dessen Anfahren handelt. Dann wird die Aufmerksamkeit des Fahrers automatisch erregt, wenn beispielsweise das vorausfahrende oder vorvorausfahrende Fahrzeug anfährt.

In einer Ausführungsform kann nach einem automatischen Anfahren des Kraftfahrzeugs zum Ausüben des Rucks automatisch ein Bremsen des Kraftfahrzeugs und ein anschließendes Lösen der Bremse des Kraftfahrzeugs erfolgen. Der Ruck wird also hier durch wechselnde Längsbeschleunigung des Kraftfahrzeugs erzeugt. Mit anderen Worten, es erfolgt ein automatisches Anfahren, und zur Steigerung der Aufmerksamkeit des Fahrers erfolgt nach dem Anfahren ein kurzes Abbremsen, was zu der Nickbewegung führt.

Gemäß einer anderen Ausführungsform wird das Kraftfahrzeug zum Ausüben des Rucks kurz beschleunigt und wieder abgebremst. Damit erfolgt die Nickbewegung des Fahrers vor dem eigentlichen Anfahren. Dabei ist es günstig, wenn für das Beschleunigen und das Abbremsen weniger als 20 cm Fahrweg des Kraftfahrzeugs benötigt wird. Besonders vorteilhaft ist, wenn der gesamte Fahrweg für die Erzeugung des Rucks höchstens 10 cm beträgt.

Weiterhin kann für das erfindungsgemäße Betriebsverfahren ein Zustand des Fahrers erfasst werden und das Ausüben des Rucks auf den Fahrer in Abhängigkeit von dem Zustand des Fahrers erfolgen. Dies hätte den Vorteil, dass die Aufmerksamkeit des Fahrers nicht gesteigert zu werden braucht, wenn er ohnehin seine Aufmerksamkeit auf den vorausfahrenden Verkehr richtet.

In einer weiteren Ausführungsform kann der Ruck durch eine Fahrwerksfedereinrichtung des Kraftfahrzeugs erzeugt werden. Dies hätte den Vorteil, dass das Fahrzeug in Längsrichtung nicht bewegt zu werden braucht, sodass bei der Erzeugung des Rucks auch beispielsweise der Abstand zum Vordermann nicht verringert wird.

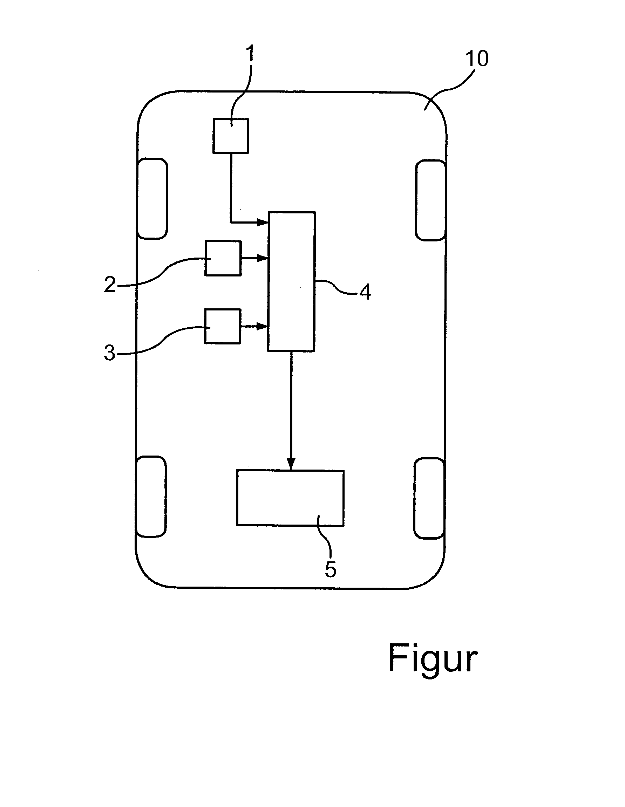

Die vorliegende Erfindung wird nun anhand der beigefügten Zeichnung näher erläutert, die die Wirkungszusammenhänge von Komponenten eines Fahrzeugs darstellt, welche zum erfindungsgemäßen Erzeugen eines Rucks genutzt werden können.

Die nachfolgend näher geschilderten Ausführungsbeispiele stellen bevorzugte Ausführungsformen der vorliegenden Erfindung dar.

Anhand von Sensorik, wie z. B. Radar, soll das Verhalten der vorausfahrenden Fahrzeuge genutzt werden, um Defizite der heutigen ACC-Systeme zu beseitigen. Zusätzlich möchte man mit einem geeigneten Verfahren den Fahrer schneller wieder in die aktuelle Situation "zurückholen", um auch hier derzeitig vorhandene Aufmerksamkeitsdefizite zu beseitigen.

Im konkreten Fall muss der Fahrer beispielsweise auf ein automatisches Anfahren vorbereitet werden. Er muss wieder vollständig aufmerksam sein und seine Aufmerksamkeit der Verkehrssituation widmen. Es ist daher eine Warnung bzw. ein Hinweis an den Fahrer abzugeben. Erfindungsgemäß wird daher eine typische Nickbewegung, die ein Anfahren mit sich bringt, im Stand oder kurz nach dem Anfahren nachgestellt bzw. erzeugt. Es wird dabei ein Ruck auf den Fahrer ausgeübt, sodass dieser beispielsweise mit dem Kopf selbst eine Nickbewegung vollführt. Somit wird die Aufmerksamkeit des Fahrers beispielsweise im Vorfeld eines automatischen Anfahrvorgangs aktiviert.

In der Systemausprägung bezüglich der Fahrerwarnung bzw. des Hinweises an den Fahrer sind mehrere Varianten denkbar. Gemäß einer ersten Variante erfolgt das Auslösen dies Nachstellens einer typischen Mitbewegung aufgrund des Anfahrens des Vorderfahrzeugs. Das Vorderfahrzeug stellt also das Objekt dar, dessen Verhalten erfasst wird. Das Anfahrereignis des Vorderfahrzeugs wird somit genutzt, um die Aufmerksamkeit des Fahrers vorausfahrenden Verkehr zu richtet.

In einer zweiten Variante erfolgt das Auslösen des Nachstellens der typischen Nickbewegung aufgrund des Anfahrens von Fahrzeugen bzw. eines Fahrzeugs vor dem Vorderfahrzeug. Damit kann die Aufmerksamkeit des Fahrers vor einem bestimmten Anfahrvorgang noch früher auf die Straße gerichtet werden, wenn also das Vorderfahrzeug noch gar nicht angefahren ist.

In einer dritten Variante wird unmittelbar nach dem Anfahrvorgang zusätzlich durch kruzzeitiges leichtes Einbremsen des Fahrzeugs mit anschließend schnellem Lösen der Bremse ein Längsruck erzeugt. Dies erzeugt eine Nickbewegung des Fahrzeugs, die einem Anfahrruck ähnlich kommt, aber beliebig appliziert bzw. parametriert werden kann. Das Fahrzeug ist also bereits automatisch angefahren und zur Steigerung der Aufmerksamkeit des Fahrers erfolgt die Nickbewegung des Fahrzeugs.

Um die Aufmerksamkeit des Fahrers vor dem eigentlichen Anfahrvorgang wieder auf die Verkehrssituation zu lenken, kann gemäß einer vierten Variante auch frühzeitig kurz angefahren und eingebremst werden, um den Nickeffekt zu erzeugen. Dabei reicht eine Bewegung des Fahrzeugs um ca. 10 cm aus. Eine unnötige Verringerung des Abstands zum Vorderfahrzeug wird dadurch vermieden.

Zusätzlich zu den Aktionen gemäß den vorhergehenden Varianten kann die Aufmerksamkeit des Fahrers auch durch Erzeugen einer Vibrationswarnung am Lenkrad oder im Fahrersitz geweckt werden. Dabei sollten die vorhandenen Aktuatoren wie beispielsweise die EPS-Lenkung genutzt werden. Vorteil dieser Variante wäre, dass weitere Insassen des Fahrzeugs neben dem Fahrer selbst nicht gestört werden, da nur der Fahrer die Warnung registriert. Dies ist bei akustischen und optischen Signalen in der Regel nicht der Fall.

Entsprechend einer sechsten Variante werden die aufmerksamkeitserregenden Maßnahmen gemäß der dritten, vierten und fünften Variante nur ausgeführt, wenn eine optionale Fahrerzustandsbeobachtung trotz der Nickbewegung im Stand detektiert, dass der Fahrer seine Aufmerksamkeit noch nicht auf die Straße vor ihm gerichtet hat. Unter Umständen wird dann eine Nickbewegung ein zweites oder drittes Mal wiederholt.

Gemäß einer siebten Variante kann die Fahrerzustandsbeobachtung auch dazu genutzt werden, das Ausüben eines Rucks in der gegenwärtigen Situation zu verhindern. Aufbauend auf den Informationen der Fahrerzustandsbeobachtung kann nämlich das aufmerksamkeitserregende Nicken im Stand unterdrückt werden, da beispielsweise der Fahrer seine Aufmerksamkeit bereits der Straße zugewendet hat.

In dem konkreten Beispiel der Figur besitzt ein Kraftfahrzeug 10 eine Umfeldsensorik 1, mit der Daten aus der Umgebung des Fahrzeugs gewonnen werden können. Die Umfeldsensorik 1 schließt beispielsweise einen Radar zur Abstands- oder Geschwindigkeitsmessung ein. Außerdem besitzt das Fahrzeug 10 eine Eigendynamiksensorik 2. Sie dient beispielsweise für Odometriezwecke, also zur Erfassung der Position des Kraftfahrzeugs anhand der Radstellung bzw. anhand der Anzahl der Radumdrehungen. Außerdem kann die Eigendynamiksensorik 2 Inertialsensoren zur Erfassung von Beschleunigungen des Fahrzeugs umfassen.

Aus den Daten der Umfeldsensorik 1 und der Eigendynamiksensorik 2 ermittelt ein Steuergerät 4 (oder ein Steuergeräteverbund) die Abstände oder die Relativbeschleunigungen zu relevanten vorausfahrenden Fahrzeugen. Im Stand detektiert man auf diese Weise das Anfahren des Vorderfahrzeugs und deren vorausfahrenden Fahrzeuge.

Sind die Anfahrbedingungen (z. B. freie Fahrbahn) erfüllt oder kommt das Steuergerät 4 zu dem Schluss, ein Anfahren steht unmittelbar bevor, so kann es über ein aktives Fahrwerk 5 eine anfahrtypische Nickbewegung des Fahrzeugs erzeugen. Das Fahrwerk 5 kann beispielsweise ein Fahrwerksystem mit rasch agierenden Aktoren sein, um die Nickbewegung im Stand zu erzielen. Hierbei kann durch die aktive Federfußpunktverstellung ein hochdynamisches Nicken des Fahrzeugs simuliert werden. Der Einsatz eines Luftfederfahrwerks für die Nickbewegung ist ebenfalls möglich. Dabei kann beispielsweise durch das frontseitige Ablassen der Luft ein Nicken erzeugt werden.

Weiterhin kann in dem Fahrzeug 10 eine Fahrerzustandserkennungseinrichtung 3 installiert sein. Sie beinhaltet beispielsweise eine Kamera, mit der der Fahrer beobachtet wird, die Fahrerzustandserkennungseinrichtung 3 liefert zusätzliche Informationen über den Fahrer, aus denen sich schlussfolgern lässt, ob ein aufmerksamkeitserregendes Nicken notwendig ist und ob weitere Maßnahmen entsprechend den aufgeführten Varianten ergriffen werden müssen. In anderen Ausführungsbeispielen beinhaltet die Umfeldsensorik 1 beispielsweise auch mindestens ein Kamerasystem, einen Laser, einen Lidar, einen PMD (Photonic Mixed Device; Kamera mit Tiefeninformationsgewinnung anhand der Lichtlaufzeit), einen CV-Sensor (Closing Velocity Sensor, der im Rahmen eines Kollisionsschutzsystems den Autofahrer beim Bremsen unterstützt) oder ein Ultraschallsensorsystem.

Bei der Fahrerzustandsbeobachtung erfolgt in der Regel im Wesentlichen eine Kopfpositionsschätzung, eine Kopfausrichtungsschätzung und/oder Blickrichtungsschätzung.

In vorteilhafter Weise kann somit ein ACC-Fahrzeug ohne Bedienhandlung des Fahrers anfahren, und das Anfahren erfolgt mit erhöhter Aufmerksamkeit des Fahrers. Damit wird ein komfortables und sicheres Stop-and-Go-Fahren möglich. Die Aufmerksamkeit des Fahrers wird gegebenenfalls rechtzeitig vor dem eigentlichen Anfahren wieder auf die Verkehrssituation gelenkt. Dadurch ergibt sich ein Sicherheitsgewinn.

## Patentansprüche

1. Verfahren zum Betreiben eines Kraftfahrzeugs (10), in dem sich ein Fahrer befindet, durch
- Erfassen eines Verhaltens eines vor dem Kraftfahrzeug befindlichen Objekts,
**gekennzeichnet durch**,
- Ausüben eines Rucks auf den Fahrer in Abhängigkeit von dem Verhalten des Objekts, indem das Fahrzeug (10) eine Nickbewegung macht.

2. Verfahren nach Anspruch 1, wobei das Objekt ein vorausfahrendes Fahrzeug ist.

3. Verfahren nach Anspruch 1, wobei das Objekt ein Fahrzeug ist, das vor einem dem Kraftfahrzeug (10) unmittelbar vorausfahrenden Fahrzeug fährt.

4. Verfahren nach einem der vorhergehenden Ansprüche, wobei das Verhalten des Objekts dessen Anfahren ist.

5. Verfahren nach einem der vorhergehenden Ansprüche, wobei nach einem Anfahren des Kraftfahrzeugs (10) zum Ausüben des Rucks automatisch ein Bremsen des Kraftfahrzeugs und ein anschließendes Lösen der Bremse des Kraftfahrzeugs erfolgt.

6. Verfahren nach einem der Ansprüche 1 bis 4, wobei zum Ausführen des Rucks das Kraftfahrzeug (10) kurz beschleunigt und wieder abgebremst wird.

7. Verfahren nach Anspruch 6, wobei für das Beschleunigen und Abbremsen weniger als 20 cm Fahrweg des Kraftfahrzeugs benötigt wird.

8. Verfahren nach einem der vorhergehenden Ansprüche, wobei ein Zustand des Fahrers erfasst wird (3), und das Ausüben des Rucks auf den Fahrer in Abhängigkeit von dem Zustand des Fahrers erfolgt.

9. Verfahren nach einem der Ansprüche 1 bis 4, wobei der Ruck durch eine Fahrwerkseinrichtung (5) des Kraftfahrzeugs erzeugt wird.

10. Kraftfahrzeug (10) mit
- einer Erfassungseinrichtung (1) zum Erfassen eines Verhaltens eines vor dem Kraftfahrzeug befindlichen Objekts,
**gekennzeichnet durch**
- eine Einrichtung (5) zum Ausüben eines Rucks auf einen Fahrer des Kraftfahrzeugs, wobei
- mit der Einrichtung (5) auf den Fahrer des Kraftfahrzeugs in Abhängigkeit von dem erfassten Verhalten des Objekts ein Ruck ausübbar ist, indem das Kraftfahrzeug (10) eine Nickbewegung macht.
